# EUROPEAN PATENT APPLICATION

(11) **EP 4 466 968 A1**
(43) Date of publication of application: **27.11.2024**
(21) Application number: 24168945.4
(22) Date of filing: 08.04.2024
(51) Int. Cl.: A01B 39/18

(54) **A WEEDING UNIT AND A METHOD FOR TREATING AN AGRICULTURAL FIELD**

(30) Priority: 05.05.2023 GB 202306708
(71) Applicant: AGCO International GmbH, 8212 Neuhausen am Rheinfall (CH)
(72) Inventor: LAUWEN, Eerke, 87616 Marktoberdorf (DE)
(74) Representative: AGCO Intellectual Property Department

(57) **Abstract**

A weeding unit (4a, 4b, 4c) and a method for treating an agricultural field (9) with the weeding unit (4a, 4b, 4c) traversing the agricultural field (9) with the steps for detecting crop (7) of a crop row (6b, 6c) growing in soil (42) of the agricultural field (9), cutting and loosening the soil (42) for weeding the crop row (6b, 6c) and moving loosened soil (43) within the crop row (6b, 6c).

## Description

### FIELD

The present disclosure relates generally to a weeding unit for treating weed growing in an agricultural field and a method for treating the weed.

### BACKGROUND

European patent application, No. 22197125.2, entitled "Vehicles and methods for treating an agricultural field", filed on September 22, 2022, discloses a vehicle with a weeding unit comprising a weeding knife for cutting into the soil of an agricultural field and destroying weed growing within crop rows. The weeding unit is equipped with a camera to distinguish crop from weed and to actuate the weeding knife if weed has been detected.

### BRIEF SUMMARY

When weed is treated by weeding blades of a weeding unit, soil can be shoveled away or removed from the crop. In this case, roots of the crop may be uncovered and dry out so that the crop may wither. Thus, it is an objective to provide a weeding unit and a method enabling an improved weeding process to reduce the risk of withered crop caused by weeding of weed.

According to an aspect of the invention there is provided a method for treating an agricultural field with a weeding unit traversing the agricultural field comprising steps for detecting crop of a crop row growing in soil of the agricultural field, cutting and loosening the soil for weeding the crop row and moving loosened soil within the crop row.

The method may be executed by one or more weeding units mounted on an agricultural implement that may be pulled by an agricultural vehicle such as a tractor over the agricultural field. A weeding unit may comprise one or more weeding blades. The weed may be cut by the one or more weeding blades when the weeding blades are cutting the soil. The weeding blades may be actuated to be moved to an applied position for cutting if no crop is detected and to an open position to avoid cutting if crop is detected. The crop may be detected by means of an imaging unit. While the weeding blades are in the applied position for cutting, the soil of the agricultural field is cut and may be loosened. Thereby, the loosened soil may be moved or shoveled away from the crop and roots of the crop may be uncovered. But the loosed soil may be moved back so that uncovered roots of the crop may be covered by soil again. Thus, withering of crop caused by a weeding process can be prevented.

The method may comprise steps for actuating a weeding blade for cutting and loosening the soil and actuating a shovel blade for moving the loosened soil.

Analogous to the actuation of a weeding blade for moving it between an open and an applied position, the shovel blade may be actuated to be moved to an applied position for moving or shoveling loosened soil within the crop row or to an open position to avoid shoveling. While the shovel blade moves or shovels loosened soil within the crop row, soil that has been moved away from the crop by the weeding blades is moved back to the crop for covering the uncovered roots of the crop again.

The weeding blade and the shovel blade may be actuated independently.

The weeding blade may be actuated and positioned in the applied position if no crop is detected close to the weeding blade. But at the same timepoint, crop may be detected close to the shovel blade so that the shovel blade needs to be moved from the applied position to the open position to avoid damage of the crop. So, the weeding blade can be moved to the applied position while the shovel blade is moved to the open position and vice versa.

The method may comprise steps for detecting loosened soil and actuating the shovel blade in response to detected crop and/or detected loosened soil.

The shovel blade may be actuated and moved to the applied position if loosened soil is detected to move the loosened soil within the crop row. So, loosened soil moved away from crop can be moved back to the crop. But if crop is detected, the shovel blade may be moved to the open position to avoid damage of crop. The shovel blade may be hold in the open position as long as no loosened soil is detected. Thus, the shovel blade is actuated if needed only and energy for actuating the shovel blade can be saved.

The method may comprise a step for actuating the weeding blade in response to detected crop.

If crop is detected close to the weeding blade, the weeding blade may be moved to the open position to avoid damage of crop.

The method may comprise steps for detecting an uneven distribution of the soil and equalizing the uneven distribution of the soil by moving more loosened soil to a lower pileup of soil than to a higher pileup of soil.

When the weeding blade cuts the soil the loosened soil may be unevenly distributed within the crop row so that pileups of soil of different height may be created. The pileups may be detected and an uneven distribution may be recognized. As consequence, the shovel blade may be actuated in response to a higher pileup of soil to move soil from the higher pileup of soil to a lower pileup of soil. Thus, the height of the soil within the crop row can be equalized to provide an equal distribution of soil within the crop row.

The method may comprise steps for actuating a first shovel blade for moving loosened soil from the first shovel blade to a second shovel blade and actuating the second shovel blade for moving the loosened soil within the crop row.

The loosened soil may be unevenly distributed between a left side of the crop row and a right side of the crop row. I. e., loosened soil needs to be moved from one side to the other side of the crop row to obtain an even distribution between both sides. So, a first shovel blade may treat the soil on one side (e. g. the left side) of the crop row and a second shovel blade may treat the soil on the other side (e. g. the right side) of the crop row. The first and the second shovel blades may be part of the same weeding unit or of two separate weeding units mounted next to each other on the implement. When a higher pileup of soil on one side of the crop row is detected by the imaging unit, the first shovel blade treating this side is actuated to move soil from the higher pileup to the other side of the crop row. For example, the first shovel blade may throw the loosened soil from one side of the crop row to the other side. Alternatively, soil from the one side of the crop row with the higher pileup may be moved to the other side of the crop row by moving the shovel blade beyond the one side into the other side of the crop row. I. e., the first shovel blade may move into a side of the crop row that is treated by the second shovel blade. Then, the second shovel blade treating the other side of the crop row may be actuated to distribute the soil received from the first shovel blade along its treating side of the crop row. Thus, the heights of pileups of soil on both sides of the crop crow may be equalized.

The method may comprise steps for detecting uncovered roots of a crop and moving loosened soil on the uncovered root of the crop.

When uncovered roots of a crop is detected, e. g. by the imaging unit, the shovel blade may be actuated to move loosened soil due the cutting by the weeding blade on the uncovered roots so that the roots of the crop may by covered again with soil. Thus, the roots of the crop may not dry out and the crop may not wither.

The method may comprise steps for detecting weed and moving loosened soil away from the weed.

When weed is detected, e. g. by the imaging unit, the shovel blade may be actuated to move loosened soil due the cutting by the weeding blade away from the weed so that the roots of the weed may by uncovered. Thus, the roots of the weed may dry out faster for improving the destruction of the weed.

The method may comprise steps for detecting weed and loosened soil, determining whether weed is at least partly separated from loosened soil and adjusting movement of weeding blade or shovel blade for separating weed from loosened soil.

The imaging unit may capture the weed and the loosened soil treated by the weeding blades and shovel blades. Based on the captured images, the weeding unit may check whether enough loosened soil is separated from the weed during the weeding operation. If too less loosened soil is separated from the weed, the weed may not wither but regrowth again. Thus, the weeding unit may adjust the movement of the weeding blade or the shovel blade to improve the separation of loosened soil from the weed. For example, the weeding unit may increase the acceleration of the weeding blade or the shovel blade if too less loosened soil is separated from the weed. Then, the weed and the loosened soil may be treated by an increased weeding force to separate more loosened soil from the weed.

The method may comprise steps for detecting weed and loosened soil, determining whether weed is at least partly separated from loosened soil and moving loosened soil within the crop row only if weed is at least partly separated from loosened soil.

The imaging unit may capture the weed and the loosened soil treated by the weeding blades and shovel blades. Based on the captured images, the weeding unit may check whether loosened soil is separated from the weed during the weeding operation. If loosened soil is not separated from weed, the weeding unit would avoid to move the shovel blade for moving the loosened soil back to the crop row so that regrowth of weed within the crop row can be avoided. Thus, the weeding unit may control the shovel blade in dependence of whether enough loosened soil is separated from the weed. Loosened soil may be moved by the shovel blade within the crop row if enough loosened soil is separated from weed, otherwise not.

The method may comprise steps for treating the soil with a fertilizer or a pesticide and covering the soil treated with the fertilizer or the pesticide at least partly with the loosened soil.

Pesticide may be any substance to control pests and may comprise herbicide, insecticide, fungicide, etc. The implement or the weeding unit may comprise a nozzle or any other device for spraying or applying the fertilizer and/or the pesticide on the soil within the crop row. For example, the weeding blade may comprise an integrated nozzle similar to the weeding knife of the weeding unit as disclosed in European patent application No. 22197125.2. The fertilizer and/or the pesticide may be applied to the soil after the weeding blade has loosened the soil but before the shovel blade has moved the loosened soil within the crop row. Thus, the soil applied with fertilizer and/or pesticide may be covered by loosened soil.

The method may comprise steps for treating the loosened soil with a fertilizer or a pesticide and covering the soil at least partly with the loosened soil treated with the fertilizer or the pesticide.

The fertilizer and/or the pesticide may be applied to the loosened soil before or after the shovel blade has moved the loosened soil within the crop row. If the fertilizer and/or the pesticide is applied before the shovel blade has moved the loosened soil within the crop row it may be possible to apply the fertilizer and/or the pesticide when the loosened soil is in an inter row section and to shovel the loosened soil back into an intra-row section. Thus, the loosened soil applied with a fertilizer and/or the pesticide can be mixed into loosened soil without application of a fertilizer and/or the pesticide.

Another aspect includes a weeding unit comprising at least one weeding blade for cutting and loosening soil, at least one shovel blade for moving loosened soil, an imaging unit for detecting crop and a control unit wherein the weeding unit is configured to carry out one or more steps of the method as described above.

The weeding unit may be mounted to an implement that is pulled by an agricultural vehicle, e. g. a tractor, through the agricultural field, e. g. parallel to the crop rows. The implement may comprise two or more weeding units to treat more than one crop row at the same time. Each weeding unit may comprise at least one weeding blade and at least one shovel blade. The control unit may receive a signal when crop has been detected by the imaging unit. In response to detected crop, the control unit may control the weeding blade and/or the shovel blade to move into an open position to avoid damage of the crop. Otherwise, the weeding blade and/or the shovel blade may be actuated for treating and weeding the agricultural field.

The weeding unit may comprise an actuator for actuating the at least one weeding blade, an actuator for actuating the at least one shovel blade, wherein one of the actuators may comprise a parallelogram mechanism.

The weeding blade and the shovel blade may have separate actuators so that the weeding blade and the shovel blade can be controlled independently from each other. The actuator of the weeding blade or the actuator of the shovel blade may comprise a parallelogram mechanism. The parallelogram mechanism may be actuated by a linear drive such as a hydraulic cylinder or a linear motor.

The weeding unit may comprise an actuator for actuating the at least one weeding blade, an actuator for actuating the at least one shovel blade, wherein one of the actuators may comprise a parallelogram mechanism and the other actuator may comprise a mechanism other than the parallelogram mechanism.

For example, the actuator comprising a mechanism other than the parallelogram mechanism may comprise a rotational drive such as an electric motor.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural vehicle with an implement comprising a weeding unit.
FIG. 2 illustrates the weeding unit in more detail.
FIG. 3A illustrates an actuator for the weeding unit comprising a parallelogram mechanism in a first position.
FIG. 3B illustrates an actuator for the weeding unit comprising a parallelogram mechanism in a second position.
FIG. 4 illustrates an alternative actuator for the weeding unit.
FIG. 5 illustrates a block diagram of the agricultural vehicle of FIG. 1.
FIG. 6 illustrates a simplified view of a control unit.
FIG. 7 illustrates an imaging unit.
FIG. 8 illustrates a flow chart of a method.

### DETAILED DESCRIPTION

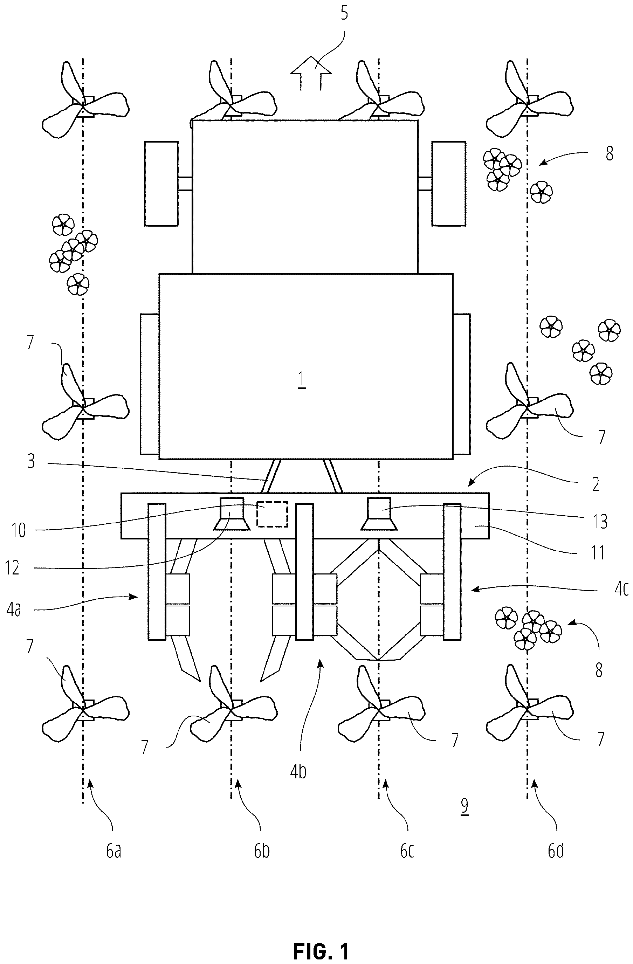

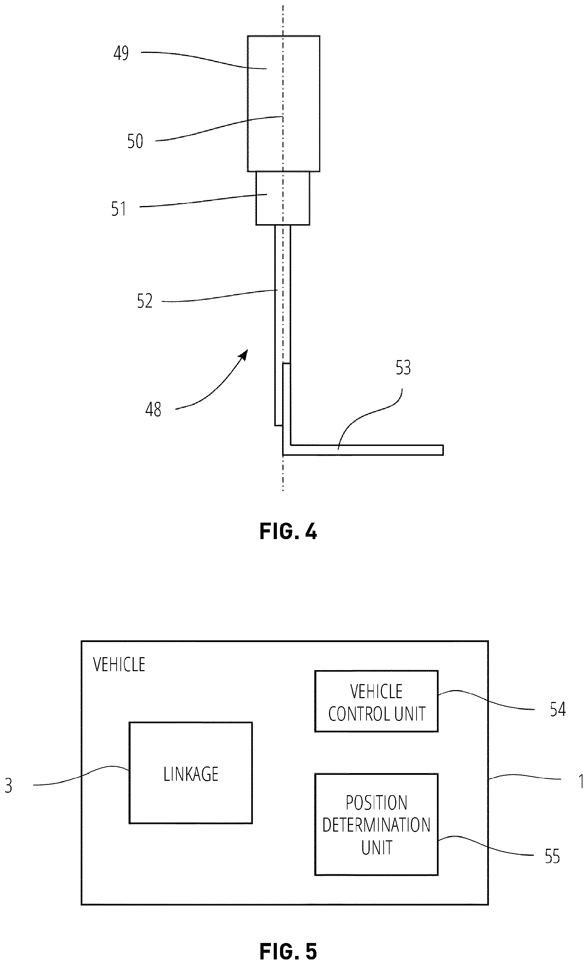

FIG. 1 shows an agricultural vehicle 1 driving on an agricultural field 9 in a driving direction 5. FIG. 5 shows a block diagram of the agricultural vehicle 1. The agricultural vehicle 1 may be of any type, as for example an operator controlled tractor or an autonomously operating robot. The agricultural vehicle 1 comprises a position determination unit 55 providing position and time signals for determining an absolute position of the agricultural vehicle 1 at a specific point of time. The position determination unit 55 may be an inertial measurement unit (IMU) and/or a global navigation satellite system (GNSS) receiver. The IMU may provide additional orientation information for improving the accuracy of the global pose estimates. The agricultural vehicle 1 comprises also a vehicle control unit 54 connected with the position determination unit 55 for exchanging signals.

As shown in FIG. 1, the agricultural vehicle 1 also comprises a linkage 3, e. g. a 3-point hitch, to which an implement 2 is connected with. The linkage 3 can raise or lower the height of the implement 2 or adjust the lateral position of the implement 2. The implement 2 comprises a carrier 11 and three weeding units 4a, 4b and 4c detachably attached to the carrier 11 for treating weeds 8 growing on the agricultural field 9 between crops 7. Each weeding unit 4a, 4b and 4c is a separate module and can be replaced by another module. The crops 7 are arranged in several crop rows 6a to 6d. The position of the weeding units 4a, 4b and 4c may be adjustable relative to the carrier 11 so that each weeding unit 4a, 4b and 4c may be brought into alignment with a crop row, e. g. weeding unit 4a with crop row 6b, weeding unit 4b with crop rows 6b and 6c and weeding unit 4c with crop row 6c.

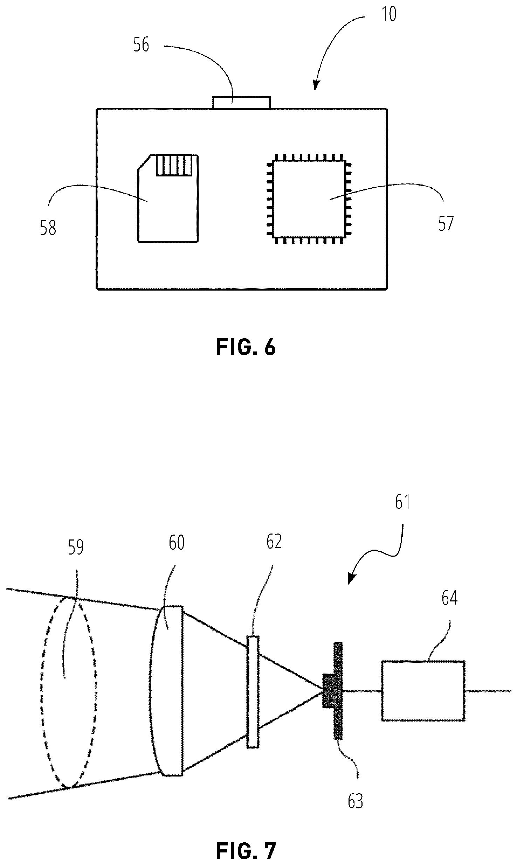

The weeding units 4a, 4b and 4c comprise an imaging unit wherein weeding unit 4a and 4b commonly share the imaging unit 12 and weeding unit 4b and weeding unit 4c commonly share the imaging unit 13. Imaging units 12 and 13 are attached to the carrier 11 each between two weeding units for an unblocked view on the crop rows 6b and 6c. As can be seen in FIG. 1, imaging unit 12 is in alignment with crop row 6b and imaging unit 13 is in alignment with crop row 6c. The imaging unit 12 and/or 13 may be designed each as an imaging unit 61 (see FIG. 7) as disclosed later.

The weeding units 4a, 4b and 4c comprise a control unit wherein all three weeding units 4a, 4b and 4c commonly share the control unit 10. The control unit 10 is integrated in the carrier 11. The control unit 10 is (wirelessly) connected with the vehicle control unit 54 and the imaging units 12 and 13 to send and receive signals between each other.

The imaging unit 12 is directed to the first crop row 6b and image imaging unit 13 to the second crop row 6c for capturing images and detecting the crops 7 and the weeds 8 along both crop rows 6b and 6c. The captured images of the crops 7 and weeds 8 are sent to and received by the control unit 10. The control unit 10 tags each captured image with a position and time stamp received from the position determination unit 55 via the vehicle control unit 54. The control unit 10 analyses the captured images and distinguishes crop 7 from weed 8. For example, the control unit 10 may access a database comprising images of crop and weed to compare the captured images of the crops 7 and weeds 8 with the images of the database and to identify crop and weed in the captured images.

The control unit 10 also analyses the captured images of the imaging units 12 and 13 to check whether the position of each weeding unit 4a, 4b and 4c is in alignment with the corresponding crop rows, for example whether weeding unit 4a is aligned with crop row 6b,weeding unit 4b is aligned with crop row 6b and 6c and weeding unit 4c is aligned with crop row 6c. If not, the control unit 10 triggers the implement 2 to adjust the position of the corresponding weeding unit 4a, 4b or 4c and to bring each weeding unit 4a, 4b and 4c into alignment with its corresponding crop row. Optionally, also the linkage 3 may be adjusted to change the position of the implement 2. Also optionally, the control unit 10 may calculate a positional deviation between one of the weeding units 4a, 4b, 4c and a corresponding crop row 6b, 6c based on the position signals received from the position determination unit 55.

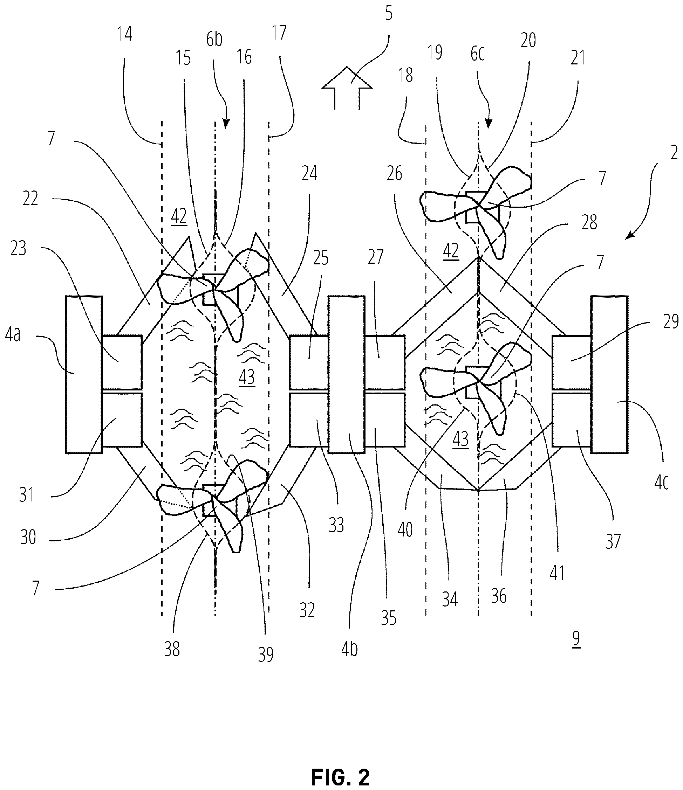

FIG. 2 shows the weeding units 4a, 4b and 4c mounted to the implement 2 in more detail. Each weeding unit 4a, 4b and 4c comprises at least one weeding blade and at least one shovel blade: Weeding unit 4a comprises weeding blade 22 actuatable by an actuator 23 and shovel blade 30 actuatable by an actuator 31; weeding unit 4b comprises a left weeding blade 24 actuatable by an actuator 25 and a right weeding blade 26 actuatable by an actuator 27 as well as a left shovel blade 32 actuatable by an actuator 33 and a right shovel blade 34 actuatable by an actuator 35; weeding unit 4c comprises a weeding blade 28 actuatable by an actuator 29 and a shovel blade 36 actuatable by an actuator 37.

As can be seen in FIG. 2, each of the two crop rows 6b and 6c is treated by two weeding units. The weeding blade 22 and the shovel blade 30 of weeding unit 4a treat a left side of crop row 6b and the left weeding blade 24 and the left shovel blade 32 of weeding unit 4b treat the right side of the same crop row 6b. Analogously, the right weeding blade 26 and the right shovel blade 34 of weeding unit 4b treat a left side of crop row 6c and weeding blade 28 and shovel blade 36 of the weeding unit 4c treat a right side of the same crop row 6c. I. e., weeding unit 4b treats two different sides of two different crop rows.

The weeding blades 22, 24, 26 and 28 are used to cut the soil 42 of the agricultural field 9 for destroying weed 8 growing in the agricultural field 9. As can be seen in FIG. 2, the weeding blades 26 and 28 are in an applied position for performing an intra-row weeding action within crop row 6c between two crops 7. While the agricultural vehicle 1 pulls the implement 2 in the driving direction 5, the weeding blades 26 and 28 cut the soil 42 along the crop row 6c. Thus, the soil 42 is loosened and roots or other parts of the weed 8 (see FIG. 1) may be cut by the weeding blades 26 and 28 so that the cut weed may wither.

The imaging units 12 and 13 detect when a weeding blade comes close to a crop 7, such as the weeding blades 26 and 28. Then, the corresponding weeding blades are moved to an open position to avoid a damage of the crop 7. As can be seen for example in FIG. 2, the weeding blades 22 and 24 are in an open position to pass a crop 7 of crop row 6b. The control unit 10 receives the captured images from the imaging units 12 and 13 and determines the size of the crop 7. Depending on the size of the crop 7, the control unit 10 determines how much a weeding blade needs to be opened for passing the crop 7 without any damage of the crop 7. In case of smaller crop 7, it is not necessary to fully open the corresponding weeding blade for an unscathed passing of the crop 7. So, the control unit 10 determines for each weeding blade an individual cutting line having regard to the crop 7 of the corresponding crop row wherein a cutting line defines a boundary line not to be violated by a weeding blade for avoiding damage of the crop 7. For example, weeding blade 22 is moved along cutting line 15, weeding blade 24 is moved along cutting line 16, weeding blade 26 is moved along cutting line 19 and weeding blade 28 is moved along cutting line 20 when the weeding units 4a, 4b and 4c move in the driving direction 5. Thus the weeding blades 22, 24, 26 and 28 can be moved around crop 7.

Next to the cutting lines 15, 16, 19 and 20, FIG. 2 shows also a reference line 14 assigned to weeding blade 22, a reference line 17 assigned to weeding blade 24, a reference line 18 assigned to weeding blade 26 and a reference line 21 assigned to weeding blade 28 wherein each reference line 14, 17, 18 and 21 defines a boundary line of treatment by the corresponding weeding blade when the corresponding weeding blade is in the fully open position.

When the soil 42 is loosened by the weeding blades, the loosened soil 43 may be distributed unevenly within the crop rows so that pileups of loosened soil 43 of different height may be created or loosened soil 43 from one side of the crop row may be moved to the other side of the crop row. Further, soil 42 that covered roots of crop 7 may be moved away so that the roots of the crop may be uncovered. Thus, the shovel blades 30, 32, 34 and 36 are used to distribute the loosened soil 43 evenly within a crop row and/or to cover uncovered roots of crop with loosened soil 43 again.

As can be seen in FIG. 2, the shovel blades 34 and 36 are in an applied position for performing a shoveling action within crop row 6c between two crops 7. While the agricultural vehicle 1 pulls the implement 2 in the driving direction 5, the shovel blades 34 and 36 shovel the loosened soil 43 along the crop row 6c. Thus, the loosened soil 43 is distributed within the crop row 6c and uncovered roots of crop 7 are covered with loosened soil 43 again.

The imaging units 12 and 13 detect when a shovel blade comes close to a crop 7. Then, the corresponding shovel blades are moved to an open position to avoid a damage of the crop 7. As can be seen for example in FIG. 2, the shovel blades 30 and 32 are in an open position to pass a crop 7 of crop row 6b. The control unit 10 receives the captured images from the imaging units 12 and 13 and determines the size of the crop 7. Depending on the size of the crop 7, the control unit 10 determines how much a shovel blade needs to be opened for passing the crop 7 without any damage of the crop 7. In case of smaller crop 7, it is not necessary to fully open the corresponding shovel blade for an unscathed passing of the crop 7.

Analogously to the cutting lines 15, 16, 19 and 20, the control unit 10 determines for each shovel blade an individual plough line having regard to the crop 7 of the corresponding crop row wherein a plough line defines a boundary line not to be violated by a shovel blade for avoiding damage of the crop 7. For example, shovel blade 30 is moved along plough line 38, shovel blade 32 is moved along plough line 39, shovel blade 34 is moved along plough line 40 and shovel blade 36 is moved along plough line 41 when the weeding units 4a, 4b and 4c move in the driving direction 5. Thus the shovel blades 30, 32, 34 and 36 can be moved around crop 7. Next to the cutting lines 15, 16, 19 and 20, FIG. 2 shows also a reference line 14 assigned to shovel blade 30, a reference line 17 assigned to shovel blade 32, a reference line 18 assigned to shovel blade 34 and a reference line 21 assigned to shovel blade 36 wherein each reference line 14, 17, 18 and 21 defines a boundary line of treatment by the corresponding shovel blade when the corresponding shovel blade is in the fully open position.

Since a shovel blade has a different function compared to a weeding blade (as described above), the design of each blade may be adapted for its special use case. For example, a weeding blade may be sharpened for providing good cutting results whereby a shovel blade may comprise a curved shape for better catching up and distributing loosened soil 43.

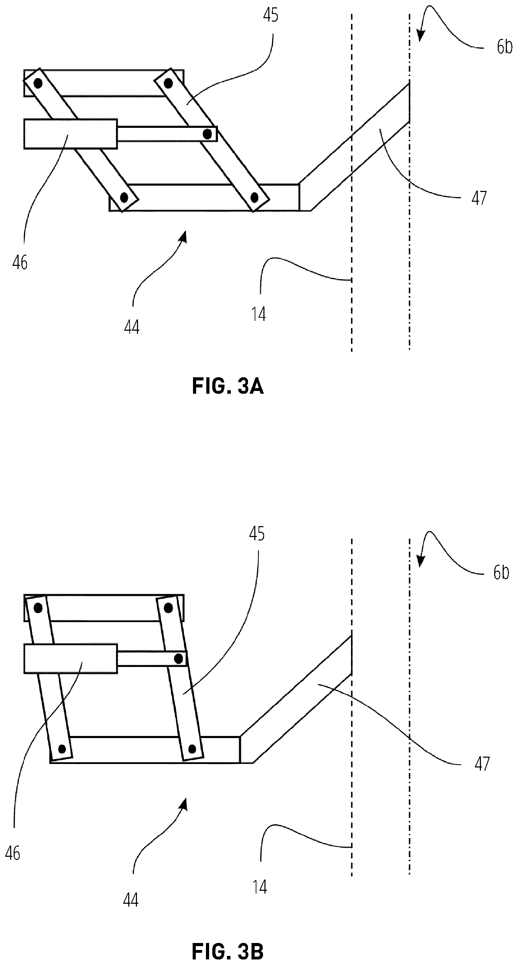

Each actuator 23, 25, 27, 29, 31, 33, 35 and 37 is connected with the control unit 10 and can be individually actuated by the control unit 10. Thus, each weeding blade and each shovel blade can be actuated independently from each other blade and moved from an applied position to an open position and vice versa. Each of the actuators 23, 25, 27, 29, 31, 33, 35 and 37 can be of a different type and may be designed as an actuator 44 as shown in FIG. 3A and FIG. 3B or as an actuator 48 as shown in FIG. 4.

FIG. 3A shows an actuator 44 in an applied position. The actuator 44 comprises a drive 46, a foldable parallelogram mechanism 45 comprising four levers and a blade 47. The blade 47 is connected to a lever of the parallelogram mechanism 45 and can be designed as a weeding blade or as a shovel blade. The drive 46 is moveably connected with two different levers of the parallelogram mechanism 45 to fold or unfold the parallelogram mechanism 45. When the drive 46 is actuated to fold the parallelogram mechanism 45, the blade 47 is moved to the applied position. When the drive 46 is actuated to unfold the parallelogram mechanism 45 instead, the blade 47 is moved to the open position as shown in FIG. 3B. For example, actuator 31 can be designed as actuator 44 to move the blade 47 between the middle of the crop row 6b and the reference line 14.

The drive 46 can be an electromechanical drive comprising an electric motor and a gear to transform the rotational movement of the motor into an axial movement or a linear drive component such as a hydraulic cylinder or any other appropriate drive to fold and unfold the parallelogram mechanism 45.

FIG. 4 shows an actuator 48 comprising a drive 49 for rotating a blade 53 about an axis 50, a coupling 51 detachably connecting the blade 53 with the drive 49 and a shaft 52 mechanically connected with the blade 53 for transferring the rotational movement of the drive 49 to the blade 53. The drive 49 can comprise an electric motor mechanically connected with a rotational gear. The drive torque of the drive 49 is transferred via the shaft 52 to the blade 53 to rotate the blade 53 between an applied position and an open position. The blade 53 can be designed as a weeding blade or as a shovel blade. The coupling 51 enables to exchange the blade 53 by another blade. Thus, the actuator 48 can be equipped with different types of weeding or shovel blades or a broken blade can easily be replaced by an intact blade.

FIG. 6 shows the control unit 10 comprising an interface 56, a controller 57 and a memory 58. The control unit 10 may receive and send signals or data via the interface 56. Thus, the control unit 10 can (wirelessly) communicate with the vehicle control unit 54. The interface 56 may be a wireless interface or a connector. The controller 57 may store the data or signals received by the control unit 10 in the memory 58. The memory 58 may contain additional data or executable computer program products, for example in terms of a computer-implemented method, that may be retrieved, processed or executed by the controller 57. Data or signals resulting from the processing of data or signals or from the execution of a computer program product may be stored to the memory 58 or sent to the interface 56 by the controller 57.

FIG. 7 shows exemplarily an imaging unit 61. The imaging unit 61 may be of the type of a 2D-camera, a stereo camera or a time-of-flight (ToF) camera, for example. A ToF camera could provide depth information and improve accuracy of detection and pose estimation. Depending on the type of the imaging unit 61, the imaging unit 61 may capture 2D or 3D images, gray-scale images, color images in any color space as for example in red-green-blue (RGB) color space, or multispectral images.

The imaging unit 61 may comprise several components such as at least one optical lens 60, an optional filter 62, a detector 63 and a processing circuitry 64. The optical lens 60 may collect and direct light from a field of view 59 of the imaging unit 61 through the filter 62 to the detector 63 and serve to focus and/or magnify images. The at least one optical lens 60 may be of the type of a fisheye lens, a rectilinear lens or any other standard and moderate wide-angle lens. The optional filter 62 passes selected spectral bands such as ultraviolet, infrared or other bands. The detector 63 may be a digital image sensor that converts electromagnetic energy to an electric signal and employs image sensing technology such as charge-coupled device (CCD) technology and/or complementary metal oxide semiconductor (CMOS) technology. The processing circuitry 64 may include a circuitry for amplifying and processing the electric signal generated by the detector 63 to generate image data, which is passed to the one or more computing devices such as the control unit 10.

The imaging unit 61 may be moveable so that the pose (i. e. position and/or orientation) of the imaging unit 61 may be changed. The movement may be determined by a corresponding sensor as for example a position sensor.

The imaging unit 61 may receive position and time signals from the position determination unit 55 for geo-referencing and time stamping of each captured image. The data captured by the imaging unit 61 is logged along with the position and time data gathered by position determination unit 55 allowing an accurate determination of the global position of objects, e. g. crop 7 or weed 8, contained in the captured images.

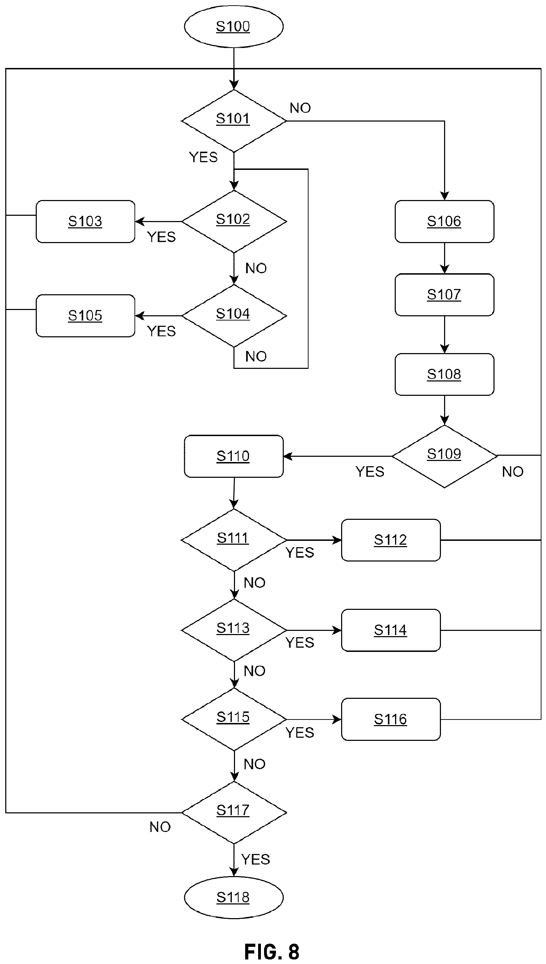

FIG. 8 shows a flow chart of a method for treating the agricultural field 9 with a weeding unit 4a, 4b and/or 4c traversing the agricultural field 9. The method may be at least partly a computer-implemented method stored as a computer program product in the memory 58 of the control unit 10. The weeding units 4a, 4b and 4c are configured to carry out the method. Computer-implemented parts of the method may be executed by the controller 57 of the control unit 10. The method is described by way of example of several steps without any restriction in respect of that steps. I. e. the number or the order of steps may be adapted, for example single steps may be excluded and/or added and executed earlier or later than described.

An operator may drive the agricultural vehicle 1 in the agricultural field 9 and steer the agricultural vehicle 1 in the driving direction 5 along the crop rows 6b and 6c. The operator may activate the method so that the method starts with step S100 and proceeds to step S101.

At step S101, the control unit 10 of weeding unit 4a, 4b or 4c checks whether crop 7 of a crop row 6b, 6c growing in soil 42 of the agricultural field 9 has been captured by an imaging unit 12 or 13. If crop 7 is detected, the method proceeds to step S102. Otherwise, the method proceeds with step S106.

At step S102, the control unit 10 checks based on the captured images of an imaging unit 12, 13 and/or the positional information of the position determination unit 55 whether a weeding blade 22, 24, 26, or 28 is close to the crop 7.

If so, the method proceeds to step S103 and the control unit 10 controls the actuator of the corresponding weeding blade to move in an open position. The control unit 10 determines a cutting line (15, 16, 19, 20) for the corresponding weeding blade and controls the weeding blade accordingly to avoid damage of the crop 7. The cutting line (15, 16, 19, 20) may be determined based on the captured images of the crop 7 showing the size of each crop 7. Depending on the size of the crop 7, the distance between the cutting line (15, 16, 19, 20) and the reference line (14, 17, 18, 21) may vary. Thus, the corresponding weeding blade is actuated in response to the detected crop 7.

If no weeding blade 22, 24, 26, or 28 is close to the crop 7, the method proceeds to step S104 and the control unit 10 checks based on the captured images of an imaging unit 12, 13 and/or the positional information of the position determination unit 55 whether a shovel blade 30, 32, 34 or 36 is close to the crop 7.

If so, the method proceeds to step S105 and the control unit 10 controls the actuator of the corresponding shovel blade to move in an open position. The control unit 10 determines a plough line (38, 39, 40, 41) for the corresponding shovel blade and controls the shovel blade accordingly to avoid damage of the crop 7. Thus, the corresponding shovel blade is actuated in response to the detected crop 7.

If no shovel blade 30, 32, 34 or 36 is close to the crop 7, the method steps back to step S102.

At step S106, the control unit 10 actuates the weeding blades 22, 24, 26, 28 for cutting and loosening the soil 42 and for weeding the crop rows 6b, 6c. I. e., the weeding blades of the weeding unit 4a, 4b or 4c are moved in the applied position and cut the soil 42 from one crop 7 to another crop 7 of a crop row 6b, 6c for an intra-row weeding action. The weeding blades can be permanently hold in the applied position as long as the weeding blades do not come too close to a crop 7 or the weeding blades can be actuated selectively to be moved in the applied position if weed 8 has been detected based on the images captured by the imaging unit 12 or 13.

Optionally, the method proceeds to step S107 and the weeding unit 4a, 4b or 4c may treat the soil 42 with a fertilizer or a pesticide.

For example, the weeding unit 4a, 4b or 4c may be configured as the weeding unit disclosed in European patent application, application No. 22197125.2, entitled "Vehicles and methods for treating an agricultural field", filed on September 22, 2022, which is hereby incorporated by reference in its entirety, and comprise a weeding-injection unit and weeding blades with integrated nozzles for applying fertilizer or pesticide into the soil. The control unit 10 may actuate such a weeding-injection unit installed in the weeding unit 4a, 4b or 4c. Alternatively, other spray units may be installed in the weeding unit 4a, 4b or 4c and actuated by the control unit 10.

Additionally, the control unit 10 may execute a step for actuating a shovel blade (30, 32, 34, 36) for covering the soil 42 treated with the fertilizer or the pesticide at least partly with the loosened soil 43.

Thus, the fertilizer or the pesticide may be protected by the covering soil. For example, the covering soil protects the pesticide against being picked up by animals, e. g. birds, for which the pesticide is not designated.

Optionally, the method proceeds to step S108 and the weeding unit 4a, 4b or 4c may treat the loosened soil 43 with a fertilizer or a pesticide.

Analogously to step S107, the fertilizer or the pesticide may be applied to the loosened soil 43 by means of the weeding-injection unit or any other spray unit installed in the weeding unit 4a, 4b or 4c.

Additionally, the control unit 10 may execute a step for actuating a shovel blade (30, 32, 34, 36) for covering the soil 42 at least partly with the loosened soil 43 treated with the fertilizer or the pesticide. Thus, the fertilizer and the pesticide applied to the loosened soil 43 may be dispensed at least partly to the soil 42.

The method proceeds to step S109 and the control unit 10 checks whether loosened soil 43 has been detected.

The loosened soil 43 may be moved away from the crop 7 due to the weeding of the crop 7 as for example processed at step S106. The loosened soil 43 may be detected based on the captured images of the imaging unit 12 or 13. Loosened soil 43 may also be expected by the control unit 10 close to a position where a weeding blade has been moved to the applied position, e. g. close to a cutting line 15, 16, 19 or 20. If no loosened soil 43 has been detected, the method steps back to step S101. Otherwise, if loosened soil 43 has been detected, the method proceeds to step S110.

At step S110, the control unit 10 may actuate the shovel blade 30, 32, 34 or 36 of the weeding unit 4a, 4b, or 4c in response to the detected loosened soil 43.

I. e., the shovel blades (30, 32, 34, 36) of the weeding unit 4a, 4b, or 4c are moved in the applied position. The shovel blades may be actuated independently from each other. One shovel blade may be moved or hold in the applied position whereas the other shovel blade may be moved or hold in the open position. When a shovel blade 30, 32, 34 or 36 is actuated the shovel blade 30, 32, 34 or 36 moves the loosened soil 43. The loosened soil 43 moved away from crop 7 due to the weeding action may be moved within the crop row (6b, 6c) and may be moved back to the crop 7. I. e., the shovel blades may be actuated for an intra-row shoveling action. The shovel blades 30, 32, 34 or 36 can be permanently hold in the applied position as long as the shovel blades do not come too close to a crop 7 or the shovel blades 30, 32, 34 or 36 can be actuated selectively to be moved in the applied position if loosened soil 43 has been detected based on the images captured by the imaging unit 12 or 13.

At step S110, the control unit 10 may also determine whether weed 8 is at least partly separated from loosened soil 43 and move loosened soil 43 within the crop row only if weed 8 is at least partly separated from loosened soil 43. The control unit 10 receives images of the weed 8 and the loosened soil 43 treated by the weeding blades 22, 24, 26, 28 and/or shovel blades 30, 32, 34, 36 from the imaging unit 12 or 13. Based on the images, the control unit 10 determines if enough loosened soil 43 is separated from weed 8 or not. If loosened soil 43 is not separated from weed 8, the control unit 10 avoids to control the shovel blade 30, 32, 34, 36 to move the loosened soil 43 within the crop row. Otherwise, if enough loosened soil 43 is separated from the weed 8, the control unit 10 controls the shovel blade 30, 32, 34, 36 to move the loosened soil 43 within the crop row. Thus, the control unit 10 may control the shovel blade 30, 32, 34, 36 in dependence of whether enough loosened soil 43 is separated from the weed 8 to avoid regrowth of the weed 8 in case of too less separation of loosened soil 43 from weed 8.

Optionally, the method proceeds to step S111 and the control unit 10 may detect whether the soil 42 is unevenly distributed.

The soil 42 may be unevenly distributed within a crop row (6b, 6c) due to the weeding action, for example if a weeding blade 22, 24, 26 or 28 treating within a crop row moves away more soil from a crop 7 than the other weeding blade 22, 24, 26, or 28 treating within the same crop row. So, there may be a lower pileup of soil 42 where more loosened soil 43 has been moved away and a higher pileup of soil 42 where less loosened soil 43 has been moved away. The uneven distribution of soil 42 may be detected based on the images captured by the imaging unit 12 or 13. If an uneven distribution of soil is detected, the method proceeds to step S112. Otherwise, the method may proceed optionally to step S113.

At step S112, the control unit 10 of the weeding unit 4a, 4b or 4c may actuate a shovel blade 30, 32, 34 or 36 for equalizing the uneven distribution of the soil 42. The uneven distribution of soil 42 may be equalized by moving more loosened soil 43 to a lower pileup of soil 42 than to a higher pileup of soil 42. The control unit 10 may localize based on the images captured by the imaging unit 12 or 13 where loosened soil 43 needs to be shoveled by which shovel blade 30, 32, 34 or 36 for equalizing the uneven distribution.

Optionally, a first shovel blade (30, 34) may be actuated by the control unit 10 for moving loosened soil 43 from the first shovel blade (30, 34) to a second shovel blade (32, 36). The first shovel blade (30, 34) may treat one side of a crop row and the second shovel blade (32, 36) may treat the other side of the same crop row. For example, the control unit 10 may control the first shovel blade (30, 34) to move the first shovel blade (30, 34) beyond the one side of the crop row treated by the first shovel blade (30, 34) into the other side of the crop row treated by the second shovel blade (32, 36). Thus, an uneven distribution of soil between the first and the second shovel blade may be equalized wherein the shovel blade shoveling more soil may move soil to the shovel blade shoveling less soil.

Optionally, the second shovel blade (32, 36) receiving soil from the first shovel blade (30, 34) may be actuated by the control unit 10 for moving the loosened soil 43 within the crop row (6b, 6c). Thus, the second shovel blade may equally distribute the received soil. Then, the method steps back to step S101.

At step S113, the control unit 10 may detect whether root of crop 7 may be uncovered.

For example, a weeding blade 22, 24, 26 or 28 may move away so much loosened soil 43 that roots of a crop 7 may be uncovered by soil. Roots of crop 7 being uncovered may be detected by the control unit 10 based on the images captured by the imaging unit 12 or 13. If uncovered roots of crop 7 is detected, the method proceeds to step S114. Otherwise, the method may proceed optionally to step S115.

At step S114, a shovel blade 30, 32, 34 or 36 is actuated by the control unit 10 for moving loosened soil 43 on the uncovered root of the crop 7. The loosened soil 43 may be loosened by one of the weeding blades (22, 24, 26, or 28) or the shovel blade (30, 32, 34 or 36) may have received the loosened soil 43 from one of the other shovel blades. Based on the images captured by the imaging unit 12 or 13, the control unit 10 may determine the location of a crop 7 having uncovered roots and where the loosened soil 43 needs to be shoveled. Based on the images, the control unit 10 may also determine how much loosened soil 43 is needed to cover the uncovered roots with soil again. Then, the method steps back to step S101.

At step S115, the control unit 10 may detect whether weed 8 is close to a shovel blade 30.

For example, weed 8 being close to a shovel blade 30, 32, 34 or 36 may be detected based on the images captured by the imaging unit 12 or 13 and/or the positional information of the position determination unit 55. If weed 8 is detected, the method proceeds to step S116. Otherwise, if no weed 8 being close to a shovel blade 30, 32, 24 or 36 is detected, the method proceeds to step S117.

At step S116, the shovel blade 30, 32, 34 or 36 being close to the weed 8 is actuated by the control unit 10 for moving loosened soil 43 away from the weed 8. Thus, the weed 8 is not cut only by one of the weeding blades 22, 24, 26 or 28 but also freed from soil. Due to the missing soil, the weed 8 may dry out and a renewed sprouting of the weed 8 may be prevented.

At the same step, the control unit 10 may also determine whether weed 8 is at least partly separated from loosened soil 43 and adjust movement of weeding blades 22, 24, 26, 28 or shovel blades 30, 32, 34, 36 for separating weed 8 from loosened soil 43. The control unit 10 receives from the imaging unit 12 images of the weed 8 and the loosened soil 43 treated by the weeding blades 22, 24, 26, 28 and/or shovel blades 30, 32, 34, 36. Based on the captured images, the control unit 10 checks whether enough loosened soil 43 is separated from the weed 8 during the weeding operation. If too less loosened soil 43 is separated from the weed 8, the control unit 10 improves the weeding operation of the weeding blades 22, 24, 26, 28 and/or the shovel blades 30, 32, 34, 36. For example, the control unit 10 increases the acceleration of the weeding blades 22, 24, 26, 28 or the shovel blades 30, 32, 34, 36 for treating the weed 8 and the loosened soil 43 by an increased weeding force.

Then, the method steps back to step S101.

At step S117, the control unit 10 checks whether an end of the crop row 6b or 6c has been reached.

The end of the crop row 6b or 6c may be reached if the agricultural vehicle 1 respectively the weeding unit 4a, 4b or 4c approaches a border, such as a headland, of the agricultural field 9. The end of the crop row 6b or 6c may be detected based on the positional information of the position determination unit 55 or the images captured by the imaging unit 12 or 13. If the end of the crop row 6b or 6c has been reached, the method can be stopped. Then, the method proceeds to step S118 and ends. The method may be restarted again with step S100.

Otherwise, if the end of the crop row 6b or 6c has not been reached yet, the method steps back to S101.

All references cited herein are incorporated herein in their entireties. If there is a conflict between definitions herein and in an incorporated reference, the definition herein shall control.

### LISTING OF DRAWING ELEMENTS

1 agricultural vehicle
2 implement
3 linkage
4a weeding unit
4b weeding unit
4c weeding unit
5 driving direction
6a crop row
6b crop row
6c crop row
6d crop row
7 crop
8 weed
9 agricultural field
10 control unit
11 carrier
12 imaging unit
13 imaging unit
14 reference line
15 cutting line
16 cutting line
17 reference line
18 reference line
19 cutting line
20 cutting line
21 reference line
22 weeding blade
23 actuator
24 weeding blade
25 actuator
26 weeding blade
27 actuator
28 weeding blade
29 actuator
30 shovel blade
31 actuator
32 shovel blade
33 actuator
34 shovel blade
35 actuator
36 shovel blade
37 actuator
38 plough line
39 plough line
40 plough line
41 plough line
42 soil
43 soil
44 actuator
45 parallelogram mechanism
46 drive
47 blade
48 actuator
49 drive
50 axis
51 coupling
52 shaft
53 blade
54 vehicle control unit
55 position determination unit
56 interface
57 controller
58 memory
59 field of view
60 lens
61 imaging unit
62 filter
63 detector
64 processing circuitry

## Claims

1. A method for treating an agricultural field (9) with a weeding unit (4a, 4b, 4c) traversing the agricultural field (9), comprising:
Detecting crop (7) of a crop row (6b, 6c) growing in soil (42) of the agricultural field (9);
cutting and loosening the soil (42) for weeding the crop row (6b, 6c);
moving loosened soil (43) within the crop row (6b, 6c).

2. The method of claim 1, comprising:
Actuating a weeding blade (22, 24, 26, 28) for cutting and loosening the soil (42);
actuating a shovel blade (30, 32, 34, 36) for moving the loosened soil (43).

3. The method of claim 2, wherein the weeding blade (22, 24, 26, 28) and the shovel blade (30, 32, 34, 36) are actuated independently.

4. The method of claim 2 or 3, comprising:
Detecting loosened soil (43); and
actuating the shovel blade (30, 32, 34, 36) in response to detected crop (7) and/or detected loosened soil (43).

5. The method of any one of claims 2 to 4, comprising:
Actuating the weeding blade (22, 24, 26, 28) in response to detected crop (7).

6. The method of any one of the preceding claims, comprising:
Detecting an uneven distribution of the soil (42); and
equalizing the uneven distribution of the soil (42) by moving more loosened soil (43) to a lower pileup of soil (42) than to a higher pileup of soil (42).

7. The method of any one of the preceding claims, comprising:
Actuating a first shovel blade (30, 34) for moving loosened soil (43) from the first shovel blade (30, 34) to a second shovel blade (32, 36); and
actuating the second shovel blade (32, 36) for moving the loosened soil (43) within the crop row (6b, 6c).

8. The method of any one of the preceding claims, comprising:
Detecting uncovered roots of a crop (7); and
moving loosened soil (43) on the uncovered root of the crop (7).

9. The method of any one of the preceding claims, comprising:
Detecting weed (8); and
moving loosened soil (43) away from the weed (8).

10. The method of any one of claims 2 to 9, comprising:
Detecting weed (8) and loosened soil (43);
determining whether weed (8) is at least partly separated from loosened soil (43); and
adjusting movement of weeding blade (22, 24, 26, 28) or shovel blade (30, 32, 34, 36) for separating weed (8) from loosened soil (43).

11. The method of any one of the preceding claims, comprising:
Detecting weed (8) and loosened soil (43);
determining whether weed (8) is at least partly separated from loosened soil (43); and
moving loosened soil (43) within the crop row (6b, 6c) only if weed (8) is at least partly separated from loosened soil (43).

12. The method of any one of the preceding claims, comprising:
Treating the soil (42) with a fertilizer or a pesticide; and
covering the soil (42) treated with the fertilizer or the pesticide at least partly with the loosened soil (43).

13. The method of any one of the preceding claims, comprising:
Treating the loosened soil (43) with a fertilizer or a pesticide; and
covering the soil (42) at least partly with the loosened soil (43) treated with the fertilizer or the pesticide.

14. A weeding unit (4a, 4b, 4c) comprising:
At least one weeding blade (22, 24, 26, 28) for cutting and loosening soil (42);
at least one shovel blade (30, 32, 34, 36) for moving loosened soil (43);
an imaging unit (12, 13) for detecting crop (7); and
a control unit (10); wherein
the weeding unit (4a, 4b, 4c) is configured to carry out a method of any one of the preceding claims.

15. The weeding unit (4a, 4b, 4c) of claim 14, comprising:
An actuator (23, 25, 27, 29) for actuating the at least one weeding blade (22, 24, 26, 28);
an actuator (31, 33, 35, 37) for actuating the at least one shovel blade (30, 32, 34, 36); wherein
one of the actuators comprises a parallelogram mechanism (45).
